# EUROPEAN PATENT APPLICATION

(11) **EP 4 394 203 A1**
(43) Date of publication of application: **03.07.2024**
(21) Application number: 23217929.1
(22) Date of filing: 19.12.2023
(51) Int. Cl.: F16F 9/02

(54) **GAS SPRING AND ITS PRODUCTION METHOD**

(30) Priority: 28.12.2022 IT 202200027024
(71) Applicant: Special Springs S.r.l., 36060 Romano d'Ezzelino (VI) (IT)
(72) Inventor: CAPPELLER, Augusto, 36060 ROMANO D'EZZELINO (VI) (IT); FIORESE, Massimo, 36060 ROMANO D'EZZELINO (VI) (IT); GUSELLA, Giovanni, 36060 ROMANO D'EZZELINO (VI) (IT)
(74) Representative: Studio Torta S.p.A.

(57) **Abstract**

Gas spring (1) comprising: an outer casing (2) which is internally provided with a closed cavity (3); and a piston-rod (4), which is partially inserted into the outer casing (2) in axially slidable and fluid-tight manner, and additionally protrudes cantilevered within said closed cavity (3) so as to form a variable-volume closed chamber (5) adapted to contain a pressurized gas; the piston-rod (4) comprising: a rectilinear bar (11) with substantially constant section; and a retractable anti-extraction structure, which is accommodated in said rectilinear bar (11), and is capable of alternately assuming a retracted configuration in which it is substantially entirely housed within the rectilinear bar (11), and an extracted configuration in which it protrudes cantilevered outwards of the rectilinear bar (11), laterally to the same, in order to prevent the complete coming out of the rectilinear bar (11) from the closed cavity (3).

## Description

### CROSS-REFERENCE TO RELATED APPLICATIONS

This patent application claims priority from Italian patent application no. 102022000027024 filed on December 28, 2022, the entire disclosure of which is incorporated herein by reference.

### TECHNICAL FIELD

The present invention relates to a gas spring and its production method.

More in detail, the present invention relates to a gas spring suitable for use in the metal sheet forming field. Use to which the following disclosure will make explicit reference without thereby losing generality.

### BACKGROUND OF THE INVENTION

As is known, the gas springs that are used in the moulds for metal sheet forming generally comprise: a cup-shaped body substantially cylindrical in shape; a guide bushing, separate and distinct from the cup-shaped body, which closes in fluid-tight manner the mouth of the cup-shaped body by interposition of a series of annular sealing gaskets; and a substantially cylindrical-shaped, movable piston-rod which is fitted in pass-through and axially slidable manner in the hole at centre of the guide bushing, so as to be able to move axially with respect to the cup-shaped body between a retracted position and an extracted or extended position.

More in detail, the piston-rod is fitted into the guide bushing in fluid-tight manner by interposition of a series of annular sealing gaskets, so as to form/delimit, together with the cup-shaped body and the guide bushing, a variable-volume closed chamber, which is filled with a high-pressure gas.

The end of the piston-rod located inside the variable-volume closed chamber, moreover, is provided with an annular anti-extraction flange that protrudes cantilevered in radial direction and prevents the complete extraction of the piston-rod from the guide bushing.

The high-pressure gas keeps the piston-rod in the extracted or extended position, i.e. with the anti-extraction annular flange in abutment on the guide bushing, until the piston-rod undergoes an axial force capable of overcoming the thrust of the gas.

The bottom of the cup-shaped body is additionally provided with two pass-through ducts that are closed in fluid-tight manner, respectively, by a one-way valve and by a safety plug.

The one-way valve is oriented so as to allow the pressurized gas to enter the variable-volume closed chamber.

The safety plug, on the other hand, is structured so as to automatically discharge the pressurized gas outwards of the gas spring when the piston-rod performs an "overtravel", i.e. when the piston-rod enters within the cup-shaped body exceeding the maximum stroke allowed by the dimensions of the gas spring.

Since the gas contained in the variable-volume chamber has a nominal pressure (i.e. the pressure with the fully extended piston-rod) rather high (usually ranging from 20 to 350 bar), the various components of the gas spring must be made with extreme precision so as to minimize the mechanical plays among the parts.

Consequently, the cup-shaped body, the guide bushing and the piston-rod are made separately from each other, with the aid of numerically controlled machine tools that guarantee a high degree of precision.

Clearly, realizing each component starting from a corresponding metal block produces a high amount of metal scraps and other machining residues. This fact, combined with the high hourly cost of the CNC machine tools, is the cause of the high production costs of the gas springs.

### SUMMARY OF THE INVENTION

Aim of the present invention is to reduce the production costs of the gas springs.

In accordance with these aims, according to the present invention there is provided a gas spring as defined in claim 1 and preferably, though not necessarily, in any one of the claims depending on it.

According to the present invention there is moreover provided a production method of a gas spring as defined in claim 14 and preferably, though not necessarily, in any one of the claims depending on it.

### BRIEF DESCRIPTION OF THE DRAWINGS

The present invention will now be described with reference to the accompanying drawings, which show a nonlimiting embodiment thereof, wherein:
- Figure 1 is a perspective view of a gas spring realized according to the teachings of the present invention, with parts removed for clarity's sake;
- Figure 2 is a side view of the gas spring shown in Figure 1, sectioned along the midplane and with parts removed for clarity's sake;
- Figure 3 is a partially exploded perspective view of the piston-rod of the gas spring shown in Figures 1 and 2, with parts removed for clarity's sake;
- Figures 4 to 11 show some steps of the production of the gas spring shown in Figures 1 and 2, with parts in section and parts removed for clarity's sake; whereas
- Figure 12 is a perspective view of a variant embodiment of the gas spring shown in the previous figures, with parts in section and parts removed for clarity's sake.

### DETAILED DESCRIPTION OF THE EMBODIMENTS

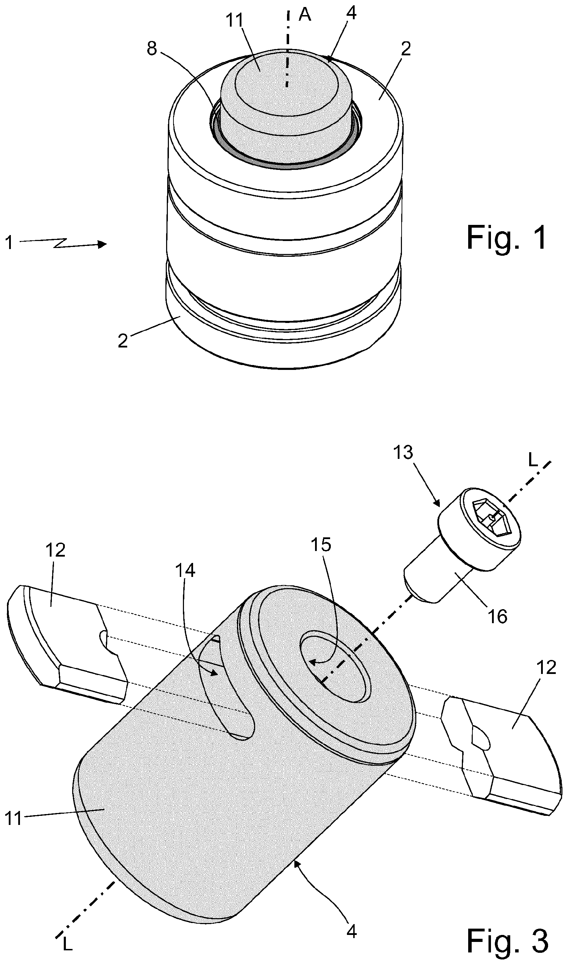

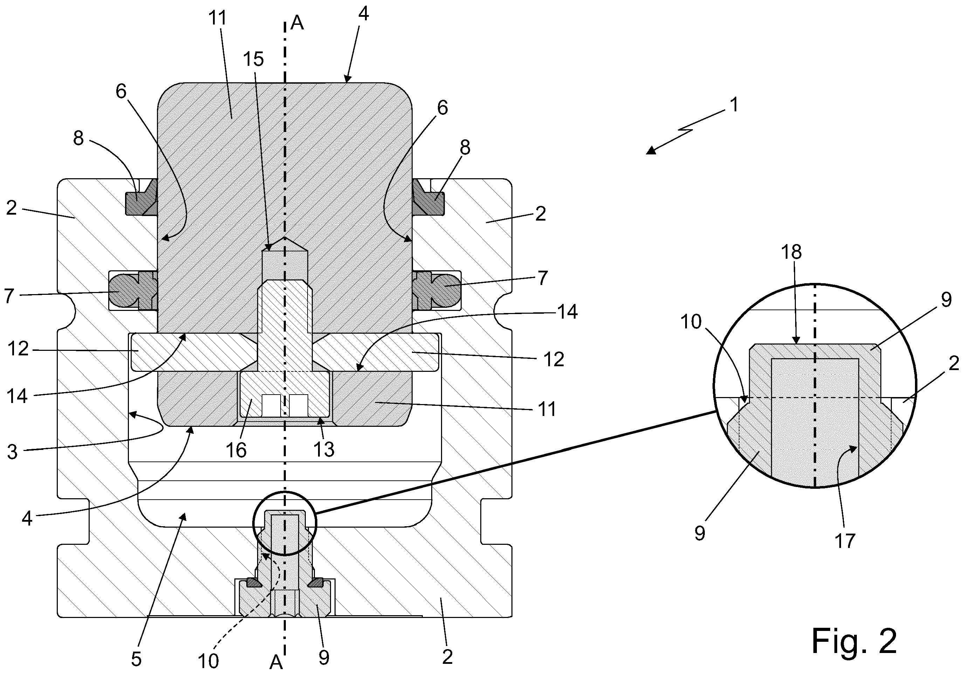

With reference to Figures 1 and 2, number 1 denotes as a whole a gas spring that can be advantageously used in the presses or moulds for the cold forming of metal sheets and the like.

The gas spring 1 comprises: an outer casing 2 with rigid structure, which is internally provided with a large closed cavity 3; and a substantially rectilinear piston-rod assembly 4, which is fitted in the outer casing 2 in axially slidable and fluid-tight manner, and is shaped/structured so as to protrude cantilevered outwards of the casing 2 and at the same time also protrude cantilevered within the cavity 3, so as to form/delimit, within the casing 2, a variable-volume closed chamber 5 that contains or is adapted to contain nitrogen or other pressurized gas.

More in detail, the piston-rod assembly 4 is inserted in pass-through and axially slidable manner within a substantially complementary-shaped, rectilinear hole 6 that is realized in the casing 2 so as to put the inner cavity 3 in direct communication with the outside.

In other words, the rectilinear hole 6 ends in inner cavity 3.

The part of the piston-rod assembly 4 that remains stably accommodated within the closed cavity 3, additionally includes an anti-extraction structure, which is adapted to abut on the inner surface of the cavity 3, at the mouth of the rectilinear hole 6, to prevent the complete coming out of the piston-rod assembly 4 from the casing 2 due to the thrust exerted by the pressurized gas.

The pressurized gas present in the cavity 3, or rather in the closed chamber 5, tends to maximize the volume of the closed chamber 5, and is therefore adapted to bring and hold the piston-rod assembly 4 in an extracted or extended position (see Figure 2), in which it arranges the anti-extraction structure of the piston-rod assembly 4 in abutment against the inner surface of the cavity 3.

Preferably, the nominal pressure of the gas contained in the cavity 3 moreover ranges between 20 and 350 bar.

With reference to Figures 1 and 2, preferably the outer casing 2 is moreover substantially cylindrical in shape. The closed cavity 3, in turn, is preferably substantially cylindrical in shape and is preferably located within the casing 2 substantially coaxial to the longitudinal/central axis A of the same casing 2.

In addition, the outer casing 2 preferably has a monolithic structure (i.e. it is preferably made in a single piece), and is advantageously made of metallic material.

In other words, the outer casing 2 preferably includes a preferably substantially cylindrical-shaped, single block/ piece of metallic material, which is simultaneously provided with both the inner cavity 3 and the rectilinear hole 6.

With reference to Figures 1 and 2, the piston-rod assembly 4, in turn, is preferably arranged coaxial to the longitudinal/central axis A of casing 2.

Preferably, the rectilinear hole 6 therefore extends coaxially to the longitudinal/central axis A of casing 2 and ends at an axial end of inner cavity 3.

Furthermore, the portion of piston-rod assembly 4 that engages the rectilinear hole 6 in axially slidable manner is preferably substantially cylindrical in shape.

The rectilinear hole 6, therefore, is preferably substantially cylindrical in shape. Moreover, the nominal diameter of rectilinear hole 6 is preferably smaller than the nominal diameter of the inner cavity 3.

With reference to Figures 1 and 2, in addition the gas spring 1 is preferably provided with at least one annular sealing gasket 7 and optionally also with at least one annular oil-scraper gasket 8.

The annular sealing gasket 7 is located within the rectilinear hole 6, preferably close to the inner cavity 3, and is adapted to prevent the leakage of pressurized gas between the casing 2 and the piston-rod assembly 4. The annular oil-scraper gasket 8, on the other hand, is located within the rectilinear hole 6, preferably close to the outer surface of the casing 2, and is adapted to prevent oil and/or dirt from entering into the casing 2.

More in detail, the annular sealing gasket 7 is preferably made of polymeric material, and is preferably located within a first annular housing seat, which is made on the periphery of the rectilinear hole 6, preferably close to the inner cavity 3. The annular oil-scraper gasket 8, in turn, is preferably made of polymeric material, and is preferably located within a second annular housing seat, which is made on the periphery of the rectilinear hole 6, preferably at the mouth of the rectilinear hole 6.

With reference to Figure 2, moreover, the gas spring 1 is preferably also provided with a safety plug 9 that seals in fluid-tight manner a preferably substantially straight, auxiliary duct 10 that puts the inner cavity 3, or rather the variable-volume closed chamber 5, in direct communication with the outside.

The safety plug 9 is located and structured so as to automatically discharge the pressurized gas present within the closed chamber 5 outwards of the gas spring 1 when the piston-rod assembly 4 performs an "overtravel", i.e. when the piston-rod assembly enters within the casing 2 exceeding the maximum stroke allowed by the dimensions of the gas spring 1.

With reference to Figures 1, 2 and 3, unlike the currently known gas springs, the piston-rod assembly 4 comprises: a rectilinear bar 11 with substantially constant section, which engages the rectilinear hole 6 in axially slidable manner; and a retractable anti-extraction structure, separate and distinct from the rectilinear bar 11, which is accommodated in the rectilinear bar 11 and is capable of assuming, selectively and alternatively, a retracted configuration and an extracted configuration.

In the retracted configuration, the anti-extraction structure is substantially entirely accommodated/contained within the shape of the rectilinear bar 11. In the extracted configuration, on the other hand, the anti-extraction structure protrudes cantilevered outwards of the shape of the rectilinear bar 11, laterally to the same bar, so as to prevent the complete coming out/extraction of the rectilinear bar 11 from the inner cavity 3.

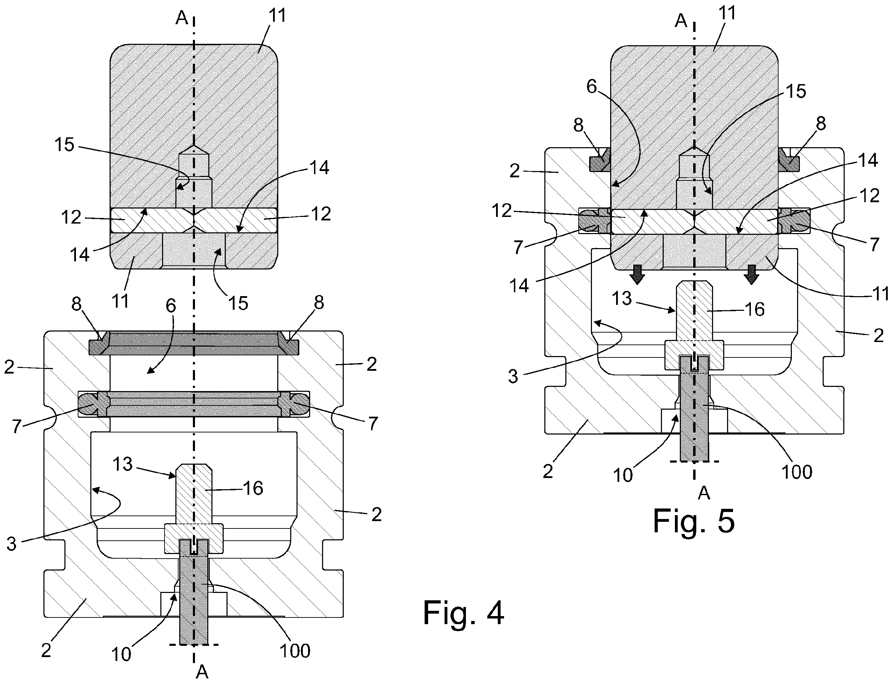

More in detail, the anti-extraction structure of the piston-rod assembly 4 preferably comprises: at least one and more conveniently a plurality of anti-extraction side appendages 12, separated and distinct from the rectilinear bar 11, which are fixed/coupled to the rectilinear bar 11 with the capability of moving between an extracted position (see Figure 2) in which the anti-extraction side appendage or appendages 12 protrude cantilevered out of the rectilinear bar 11, laterally to the same bar, and a retracted position (see Figures 4 and 5) in which the anti-extraction side appendage or appendages 12 are substantially entirely accommodated/contained within the shape of the rectilinear bar 11; and an extractor member 13, which is located on the rectilinear bar 11 preferably in a removable manner, and is adapted to selectively move the anti-extraction side appendage or appendages 12 into the extracted position, preferably then blocking the anti-extraction side appendage or appendages 12 in said extracted position.

Preferably, the rectilinear bar 11 is moreover substantially cylindrical in shape and is advantageously made of metallic material.

Similarly, the anti-extraction side appendage or appendages 12 is/are made of metallic material.

More in detail, the anti-extraction side appendage or appendages 12 are placed in the section of rectilinear bar 11 that protrudes cantilevered within the inner cavity 3 of the casing 2 and, in the extracted position, are adapted to abut on the inner surface of the cavity 3, at the mouth of the rectilinear hole 6, so as to prevent the complete extraction of the rectilinear bar 11 from the rectilinear hole 6.

Even more in detail, the anti-extraction side appendages 12 are preferably located close to the axial end of the rectilinear bar 11 that remains stably within the casing 2, hereinafter also called the inner end.

The axial end of the rectilinear bar 11 that remains stably outside the cavity 2, instead, will be hereinafter referred to as the outer end.

When in the extracted position, moreover, the anti-extraction side appendages 12 preferably also lie on a same plane substantially perpendicular to the longitudinal axis L of rectilinear bar 11 and/or are substantially evenly spaced around the longitudinal axis L of rectilinear bar 11.

Clearly the longitudinal axis L of rectilinear bar 11 preferably coincides with the longitudinal/central axis A of the outer casing 2.

More in detail, with particular reference to Figures 2 and 3, each anti-extraction side appendage 12 is preferably oblong in shape, and is fitted in axially slidable manner within a corresponding, substantially complementary-shape, housing seat 14 that extends rectilinearly within the rectilinear bar 11 preferably in a radial direction.

In the retracted position, each anti-extraction side appendage 12 is substantially entirely contained within the relative housing seat 14. In the extracted position, instead, each anti-extraction side appendage 12 protrudes cantilevered out of the rectilinear bar 11, through the mouth of the relative housing seat 14.

Preferably, the extractor member 13, on the other hand, is adapted to selectively engage/take up a part of the inner volume of the housing seat or seats 14 of the anti-extraction side appendages 12, in order to axially push/move the anti-extraction side appendage or appendages 12 into the extracted position.

More in detail, the various housing seats 14 preferably extend within the body of rectilinear bar 11 advantageously in a radial direction, up to reaching and intersecting a longitudinal hole 15, which extends inside the rectilinear bar 11 preferably while remaining substantially parallel, or more conveniently coaxial, to the longitudinal axis L of rectilinear bar 11.

In addition, the longitudinal hole 15 is preferably a blind hole and its mouth is advantageously located at the axial end of rectilinear bar 11 that contributes to delimit the closed chamber 5.

In other words, the mouth of longitudinal hole 15 preferably faces the bottom wall of casing 2.

Preferably, the extractor member 13, in turn, is adapted to selectively engage the longitudinal hole 15, in order to reduce the volume of each housing seat 14 and, consequently, to push the relative anti-extraction side appendage 12 partially out of the relative housing seat 14.

With reference to Figures 2 and 3, in the example shown, in particular, the piston-rod assembly 4 is provided with a pair of anti-extraction side appendages 12, which are located in the rectilinear bar 11 in a specular position, on opposite sides of the longitudinal axis L of rectilinear bar 11.

Preferably, the anti-extraction side appendages 12 moreover have a plate-like structure and engage in axially slidable manner respective housing seats 14, which are advantageously made in the rectilinear bar 11 in a specular position, on opposite sides of the longitudinal axis L, and are seamlessly connected to one another to form a diametrical through pocket.

The longitudinal hole 15, in turn, extends inside the rectilinear bar 11 up to intersect said diametrical through pocket substantially in the centre thereof.

The extractor member 13, on the other hand, preferably includes a locking screw 16 preferably made of metallic material, which is screwed into the longitudinal hole 15 of rectilinear bar 11 so that its threaded shank can reach and penetrate within the housing seats 14, or rather pass through the diametrical through pocket, so as to move/drive away the anti-extraction side appendages 12 from the longitudinal axis L and arrange them in the extracted position.

More in detail, in the example shown the locking screw 16 is preferably provided with a substantially cylindrical-shaped head, which has in the centre a seat roughly hexagonal in shape and advantageously also a small protruding pin, which rises from the bottom of the hexagonal seat in a direction opposite to the threaded shank, while remaining coaxial to the longitudinal axis of the screw.

In other words, the locking screw 16 is preferably a security Allen screw.

Clearly, the locking screw 16 may be replaced by a Torx screw with central pin, by a threaded grub screw (also called a headless screw), a rivet, a plug, an expansion dowel or the like.

With reference to Figure 2, the auxiliary duct 10, on the other hand, is preferably realized in the casing 2 so as to be substantially aligned to the inner end of the threaded bar 11, or rather to the locking screw 16.

In other words, the auxiliary duct 10 is preferably made in the casing 2 on the opposite side with respect to the rectilinear hole 6.

The safety plug 9, in turn, is preferably structured so as to protrude cantilevered within the cavity 3, or rather within the closed chamber 5, and to break when it is struck by the piston-rod assembly 4, or rather by the locking screw 16, during an "overtravel".

More in detail, the safety plug 9 preferably has a mushroom structure and is preferably screwed into the auxiliary duct 10, preferably with the interposition of an annular sealing gasket, so as to close/seal the auxiliary duct 10 in fluid-tight manner.

Preferably, the safety plug 9 is moreover dimensioned so that its threaded shank protrudes cantilevered within the cavity 3, or rather within the closed chamber 5.

In addition, the safety plug 9 is preferably provided with a discharge duct 17, which extends coaxial to the plug longitudinal axis and is hermetically closed, at the distal end of the threaded shank, by a breakable portion which is thus located within the closed chamber 5, and is specifically structured to break/fracture when it is struck by the piston-rod assembly 4, or rather by the locking screw 16, during an "overtravel".

In the example shown, in particular, the discharge duct 17 of safety plug 9 is preferably hermetically closed, at the distal end of the threaded shank, by a preferably substantially discoidal-shaped, thin breakable septum 18, which is specifically structured to break/fracture when it is struck by the head of the locking screw 16, or rather by the small protruding pin that rises from the bottom of the hexagonal seat of the locking screw 16.

Preferably, the breakable septum 18 is moreover dimensioned so as to break/be fractured autonomously if the pressure within the cavity 3 exceeds a predetermined limit value, advantageously ranging between 500 and 600 bar.

General operation of gas spring 1 is easy inferable from what written above, and therefore does not require further explanation.

The assembly of gas spring 1, on the other hand, comprises the steps of: arranging the anti-extraction structure of the piston-rod assembly 4 in the retracted configuration; putting/inserting the rectilinear bar 11 into the rectilinear hole 6 of the casing 2 up to place the segment of rectilinear bar 11 that accommodates the anti-extraction structure inside the cavity 3 of casing 2; arranging the anti-extraction structure of the piston-rod assembly 4 in the extracted configuration; and finally filling up the cavity 3, or rather the variable-volume closed chamber 5 that has been formed inside the casing 2 following the introduction of the rectilinear bar 11 into the cavity 3 of casing 2, with the pressurized gas.

More in detail, the assembly of gas spring 1 preferably comprises, in sequence, the steps of: inserting the anti-extraction side appendage or appendages 12 within the relative housing seats 14 present in the rectilinear bar 11, while arranging the same anti-extraction side appendage or appendages 12 in the retracted position, so that they do not protrude outwards of the rectilinear bar 11; putting/ inserting the rectilinear bar 11 into the rectilinear hole 6 of casing 2 up to placing the segment of the rectilinear bar 11 that accommodates the anti-extraction side appendage or appendages 12, inside the cavity 3 of casing 2; moving and advantageously also locking the anti-extraction side appendage or appendages 12 in the extracted position, so that they can prevent the subsequent extraction of the rectilinear bar 11; and finally filling up the cavity 3 with a pressurized gas which advantageously has a pressure ranging between 20 and 350 bar.

Preferably, the movement of the anti-extraction side appendage or appendages 12 into the extracted position moreover entails introducing the extractor member 13 into the rectilinear bar 11, so that the extractor member 13 engages the housing seats 14 of the various anti-extraction side appendages 12, while moving the one or more anti-extraction side appendage or appendages 12 into the extracted position.

Preferably, the filling of cavity 3, or rather of the variable-volume closed chamber 5, with the pressurized gas instead entails introducing the pressurized gas into the cavity 3 through the auxiliary duct 10, and then inserting the safety plug 9 into the auxiliary duct 10 in order to hermetically close the auxiliary duct 10, and thus isolate the cavity 3 from the outside.

More in detail, with reference to Figure 4, the assembly of gas spring 1 comprises the steps of inserting the anti-extraction side appendages 12 within the various housing seats 14 present in the rectilinear bar 11, while arranging the same anti-extraction side appendages 12 in the retracted position, so that they do not protrude outwards of the rectilinear bar 11; and preferably also the step of placing, inside the rectilinear hole 6, the annular sealing gasket 7 and optionally also the annular oil-scraper gasket 8.

In addition, the assembly of gas spring 1 preferably comprises the step of placing the extractor member 13, or rather the locking screw 16, inside the cavity 3 of outer casing 2, preferably by placing the same extractor member 13, or rather the locking screw 16, on the top of a tool 100 (for example an Allen wrench), which is temporarily inserted in the auxiliary duct 10 advantageously so as to protrude cantilevered within the cavity 3.

With reference to Figure 5, after having placed the extractor member 13, or rather the locking screw 16, inside the cavity 3, the assembly of gas spring 1 preferably comprises the step of inserting the rectilinear bar 11 into the rectilinear hole 6 of casing 2 up to reach the extractor member 13, or rather the locking screw 16.

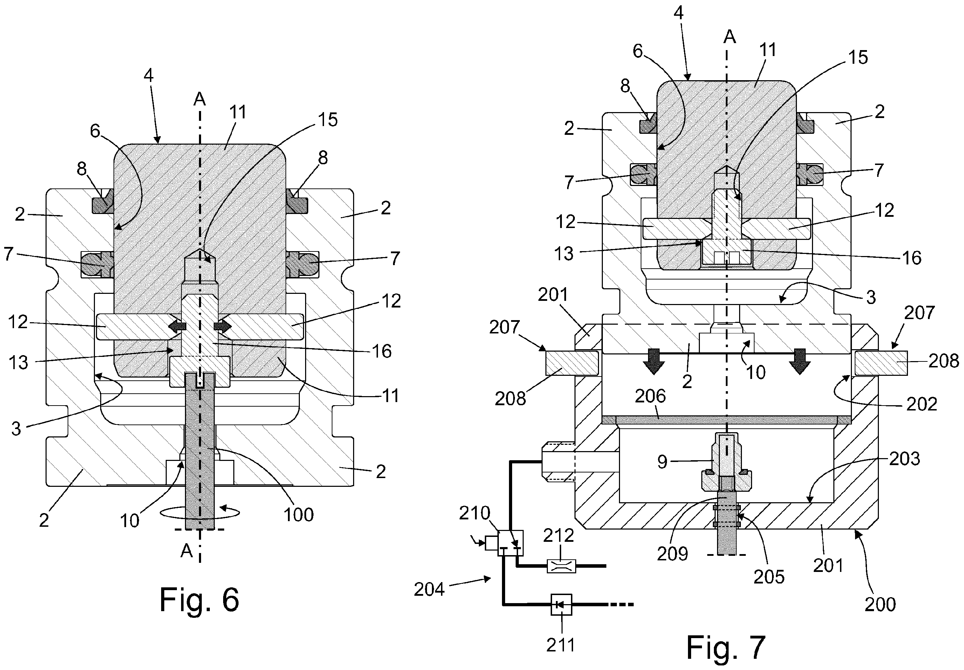

With reference to Figure 6, after the end of rectilinear bar 11 has reached the extractor member 13, or rather the locking screw 16, within the cavity 3, the assembly of gas spring 1 preferably comprises the step of introducing the extractor member 13, or rather the locking screw 16, into the longitudinal hole 15 of rectilinear bar 11, so as to move and advantageously also lock the various anti-extraction side appendages 12 in the extracted position.

More in detail, the assembly of gas spring 1 preferably entails rotating the tool 100 so as to screw the locking screw 16 into the longitudinal hole 15 of rectilinear bar 11, in order to move the anti-extraction side appendages 12 away from the longitudinal axis L of rectilinear bar 11.

Preferably, the anti-extraction side appendages 12 are locked in the extracted position when the head of the locking screw 16 moves into abutment against the same anti-extraction side appendages 12.

The assembly of piston-rod assembly 4 ends when the anti-extraction side appendages 12 are arranged in the extracted position inside the cavity 3 of outer casing 2, and preferably also when the tool 100 is extracted from the casing 2 leaving the auxiliary duct 10 free.

With reference to Figures 7 to 11, on the other hand, the filling of cavity 3, or rather of closed chamber 5, with the pressurized gas preferably comprises the steps of: creating/forming, at the mouth of auxiliary duct 10 of outer casing 2, a closed volume/space that accommodates the safety plug 9; introducing the pressurized gas into said closed volume/space so as to pressurise the cavity 3 of casing 2 and advantageously also bring the piston-rod assembly 4 into the extended/extracted position; inserting the safety plug 9 into the auxiliary duct 10 of cavity 2 so as to hermetically close the cavity 3; bringing said closed volume/space back to ambient pressure; and finally removing/eliminating said closed volume/space.

More in detail, the filling of inner cavity 3 with the pressurized gas is preferably carried out with the aid of a filling machine 200 which comprises: a base 201 preferably with monolithic structure, which is advantageously made of metallic material and is provided with a housing seat 202 structured to couple in fluid-tight manner to the part of casing 2 of gas spring 1 that has the auxiliary duct 10, and with a large recess or depression 203, which is made substantially in the centre of the housing seat 202 so as to form, underneath the casing 2 coupled to the base 201, a closed space/volume of such dimensions to accommodate the safety plug 9 of the gas spring 1; and a preferably electro-controlled pressurization circuit 204, which communicates with the recess 203 and is capable, on command, of introducing nitrogen or other pressurized gas into the closed volume/space delimited by the casing 2 and by the recess 203, or of connecting the recess 203 with the outside so as to bring/keep said closed volume/space at ambient pressure.

Clearly, the pressurization circuit 204 may also be pneumatically- or manually- controlled.

In addition, the filling machine 200 also comprises a preferably electrically-operated, inserting device 205 that is at least partially accommodated within the recess 203, and is adapted to insert, or rather screw, the safety plug 9 into the auxiliary duct 10 of casing 2, in order to isolate/ hermetically close the cavity 3 of outer casing 2.

Clearly, the inserting device 205 may also be pneumatically- or manually- operated, advantageously with tightening torque control.

Preferably, the filling machine 200 is moreover provided with retaining means adapted to retain the casing 2 in place within the housing seat 202.

More in detail, the housing seat 202 preferably has a shape substantially complementary to the part of the casing 2 of gas spring 1 that has the auxiliary duct 10, and the filling machine 200 preferably moreover includes an annular sealing gasket 206 that is located on the bottom of the housing seat 202, so as to surround the mouth of the recess or depression 203 and at the same time interpose between the outer casing 2 and the base 201.

The retaining means, on the other hand, preferably comprise an advantageously electrically- or pneumatically-operated, coupling assembly 207 which is adapted to lock, on command, the casing 2 that engages the housing seat 202 in rigid manner to the base 201.

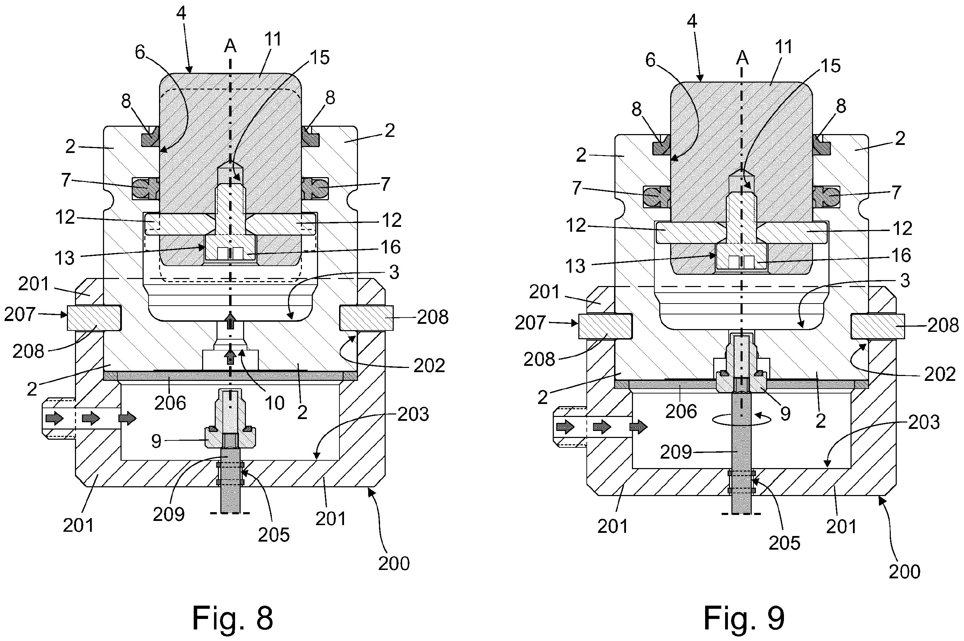

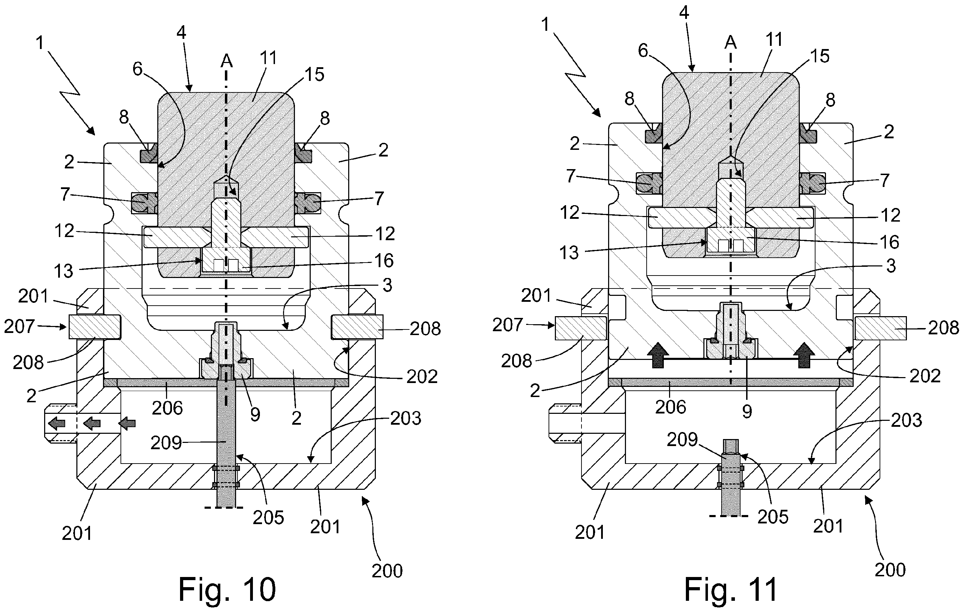

More in detail, the coupling assembly 207 preferably comprises a series of movable anchoring members 208 preferably with latch structure, which are located at the housing seat 202 and are movable on command between an extracted position (see Figures 8, 9 and 10) in which the anchoring members 208 protrude cantilevered within the housing seat 202 so as to engage an annular groove present in the outer casing 2, and a retracted position (see Figures 7 and 11) in which the anchoring members 208 do not protrude cantilevered within the housing seat 202 so as to allow the insertion and free extraction of the outer casing 2.

The inserting device 205, in turn, preferably comprises: a rectilinear shaft 209 that protrudes cantilevered within the recess 203 and has the distal end shaped so as to be able to couple in an angularly rigid and removable manner to the safety plug 9, or rather so as to fit in angularly rigid manner into the mouth of the discharge duct 17 of safety plug 9; and an advantageously electrically- controlled or operated, driving member (not shown in the figures) which is capable of moving axially and rotating the rectilinear shaft 209 about its longitudinal axis.

More in detail, the rectilinear shaft 209 is preferably inserted in axially rotatable and slidable and fluid-tight manner in a complementary-shaped, pass-through hole that is specially realized on the bottom of recess 203. The driving member, on the other hand, is preferably located outside of the recess 203, or rather the base 201.

Clearly the rectilinear shaft 209 may also be moved axially and/or rotated manually.

With reference to Figure 7, on the other hand, the pressurization circuit 204 preferably comprises: a three-way valve 210 advantageously of the electrically-controlled type, which is capable of putting the recess 203 in communication, selectively and alternatively, with a source of pressurized gas (not shown in the figures) advantageously with the interposition of a pressure regulator 211, or with the external environment advantageously with the interposition of a flow reducer 212.

With reference to Figures 7 to 11, therefore, the assembly of gas spring 1, or rather the filling of the cavity 3 with the pressurized gas, preferably comprises the steps of: placing the safety plug 9 within the recess 203 of the filling machine 200; inserting, into the housing seat 202, the part of the casing 2 of gas spring 1 that has the auxiliary duct 10, in order to hermetically close the recess 203, while forming a closed space/volume that accommodates the safety plug 9; introducing nitrogen or other pressurized gas into the recess 203 so as to bring the closed space/ volume that accommodates the safety plug 9 and the adjacent inner cavity 3 of casing 2 to a predetermined pressure; inserting the safety plug 9 into the auxiliary duct 10 of cavity 2 so as to hermetically close the cavity 3; depressurizing the recess 203 of the filling machine 200, so as to bring back to ambient pressure the closed space/volume delimited by the casing 2 and by the base 201; and finally removing the casing 2 from the housing seat 202 in the base 201 of filling machine 200.

More in detail, with reference to Figures 7, the assembly of gas spring 1, or rather the filling of cavity 3 with the pressurized gas, preferably comprises the step of placing the safety plug 9 within the recess 203 of the filling machine 200, onto the inserting device 205, or rather onto the distal end of the rectilinear shaft 209.

With reference to Figures 7 and 8, after having placed the safety plug 9 within the recess 203, the assembly of gas spring 1, or rather the filling of closed chamber 5 with the pressurized gas, preferably comprises the step of inserting, into the housing seat 202, the part of casing 2 that has the auxiliary duct 10, so as to hermetically close the recess 203; and then the step of operating the coupling assembly 207, or rather moving the movable anchoring members 208 into the extracted position, so as to lock the casing 2 firmly in place inside the housing seat 202.

With reference to Figure 8, after having placed and advantageously also locked the casing 2 in place within the housing seat 202, the assembly of gas spring 1, or rather the filling of closed chamber 5 with the pressurized gas, preferably comprises the step of operating the pressurization circuit 204, or rather the three-way valve 210, so as to introduce nitrogen or other pressurized gas into the closed volume/space delimited by the casing 2 and by the recess 203, while also filling the cavity 3 of casing 2.

With reference to Figure 9, after having filled the cavity 3 of casing 2 with the pressurized gas, the assembly of gas spring 1, or rather the filling of cavity 3 with the pressurized gas, preferably comprises the step of operating the inserting device 205 so as to insert, or rather screw, the safety plug 9 into the auxiliary duct 10 of casing 2, so as to hermetically close the cavity 3.

With reference to Figures 10 and 11, after having isolated the cavity 3 of casing 2 from the recess 203, the assembly of gas spring 1, or rather the filling of cavity 3 with the pressurized gas, preferably comprises the step of operating the pressurization circuit 204, or rather the three-way valve 210, so as to bring the recess 203 back to ambient pressure; and then the step of operating the coupling assembly 207, or rather moving the movable anchoring members 208 into the retracted position, so as to release the casing 2 from the base 201.

With reference to Figure 11, after having depressurized the recess 203 and advantageously also released the casing 2 from the base 201, the assembly of gas spring 1, or rather the filling of cavity 3 with the pressurized gas, preferably comprises the step of extracting the casing 2 from the housing seat 202.

Clearly the assembly of gas spring 1 ends with the extraction of the casing 2 from the base 201 of filling machine 200.

Clearly, the method of filling cavity 3, or rather closed chamber 5, described above may also be used to fill up, or rather pressurize, the closed chamber of a gas spring with a traditional structure, i.e. a gas spring wherein the outer casing is made up of a cup-shaped body and of a guide bushing, which is inserted in fluid-tight manner into the mouth of the cup-shaped body and is engaged in axially slidable manner by a traditional piston-rod with monolithic structure.

The advantages connected to the particular structure of the piston-rod assembly 4 and, subordinately, of the casing 2 are remarkable.

Firstly, the production times and costs of the piston-rod assembly 4 are significantly lower than those of the monolithic piston-rods used in the gas springs currently on the market.

The rectilinear bar 11, in fact, does not require high-precision machining. Furthermore, realization of housing seats 14 in the body of rectilinear bar 11 produces a very small amount of metal scraps and other machining residues.

Similarly, realization of casing 2 in a single piece allows to reduce the production costs of the gas spring 1 compared to those currently on the market.

It is finally clear that modifications and variations may be made to the gas spring 1 and its production method without, however, departing from the scope of the present invention.

For example, in a not-shown, more sophisticated embodiment, the gas spring 1 may also be provided with a one-way valve that closes in fluid-tight manner a second auxiliary duct preferably substantially rectilinear and adjacent to the auxiliary duct 10, which puts the inner cavity 3, or rather the variable-volume closed chamber 5, in direct communication with the outside. Said one-way valve is oriented so as to allow to the pressurized gas to exclusively enter into the inner cavity 3.

Clearly, if the one-way valve is present, the cavity 3 of gas spring 1 may be filled up with pressurized gas in a traditional manner, through the one-way valve.

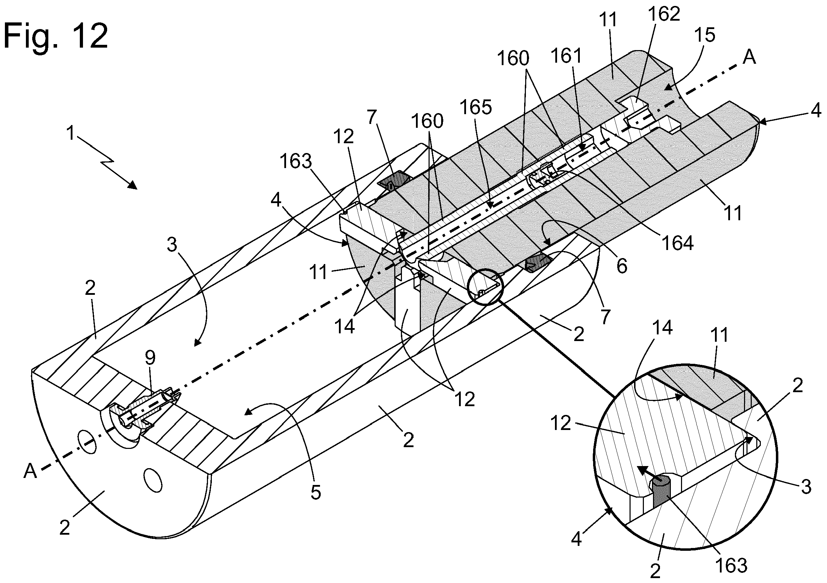

With reference to Figure 12, in a second more sophisticated embodiment, the anti-extraction side appendages 12 are preferably located at the inner end of rectilinear bar 11.

More in detail, the anti-extraction side appendages 12 are preferably fixed on the inner end of rectilinear bar 11 by means of a dovetail or similar sliding coupling.

In addition, the longitudinal hole 15 preferably extends in pass-through manner across the entire length of the rectilinear bar 11, while advantageously remaining coaxial to the longitudinal axis L of the same rectilinear bar 11. A mouth of the longitudinal hole 15 is therefore located at the outer end of rectilinear bar 11.

The extractor member 13, on the other hand, preferably comprises an at least partially threaded, rectilinear shaft 160 that is screwed into the longitudinal hole 15, so as to be axially movable between a first operating position (see Figure 12) in which the ogival tip of the rectilinear shaft 160 reaches and penetrates into the housing seats 14 of the various anti-extraction side appendages 12 that are preferably realized at the inner end of the threaded bar 11, so as to move/drive away the anti-extraction side appendages 12 from the longitudinal axis L and arrange them in the extracted position; and a second operating position in which the rectilinear shaft 160 is moved towards the outer end of the rectilinear bar 11, so as not to engage the housing seats 14 present on the inner end of the rectilinear bar 11.

More in detail, the rectilinear shaft 160 preferably has a length shorter than that of the longitudinal hole 15, and is preferably entirely contained in the longitudinal hole 15.

In this embodiment, moreover, the rectilinear shaft 160 is adapted to be moved axially, or rather screwed and unscrewed, with the aid of a second tool, which is adapted to be temporarily inserted into the longitudinal hole 15, through the outer end of rectilinear bar 11, up to reach and fit in angularly rigid manner onto the end of the rectilinear shaft 160.

More in detail, in the example shown the end of rectilinear shaft 160 is preferably provided with a substantially hexagonal-shaped, coupling seat 161 that is adapted to be engaged by an Allen tool or similar tool.

In this embodiment, moreover, the piston-rod assembly 4 preferably also comprises: a closing plug 162 that seals the longitudinal hole 15 in fluid-tight manner, and advantageously also in removable manner, in order to isolate from the outside the section of longitudinal hole 15 that accommodates the rectilinear shaft 160 and/or communicates with the cavity 3; and advantageously also one or more annular sealing gaskets (not shown in the figure), which are preferably made of polymeric material, and are placed inside the longitudinal hole 15 of rectilinear bar 11, between the rectilinear bar 11 and the rectilinear shaft 160, so as to prevent the leakage of pressurized gas along the longitudinal hole 15.

More in detail, the closing plug 162 is preferably located close to the outer end of rectilinear bar 11.

Preferably, the piston-rod assembly 4 is furthermore provided with an elastic ring 163 preferably made of metallic material, which is fitted onto the rectilinear bar 11 so as to surround the anti-extraction side appendages 12, and is adapted to elastically counteract the coming out of the same anti-extraction side appendages 12 from the shape of the rectilinear bar 11.

Finally, in this embodiment the piston-rod assembly 4 preferably also comprises a one-way valve 164 that closes in fluid-tight manner a preferably substantially rectilinear, pass-through longitudinal duct 165, which extends across the entire length of rectilinear shaft 160 while advantageously remaining coaxial to the longitudinal axis of the same rod.

In other words, the longitudinal pass-through duct 165 ends and seamlessly connects with the coupling seat 161.

The one-way valve 164 is oriented so as to allow to the pressurized gas to flow the entire rectilinear bar 11 and enter the cavity 3 of the outer casing 2.

Clearly, if the one-way valve 164 is present, the cavity 3 of gas spring 1 may be filled up with pressurized gas by introducing the pressurized gas from the outer end of the rectilinear bar 11.

## Claims

1. A gas spring (1) comprising: an outer casing (2) which is internally provided with a closed cavity (3); and a piston-rod (4), which is partially inserted into the outer casing (2) in axially slidable and fluid-tight manner and additionally protrudes cantilevered within said closed cavity (3) so as to form a variable-volume closed chamber (5) adapted to contain a pressurized gas;
the gas spring (1) being **characterized in that** said piston-rod (4) comprises: a rectilinear bar (11) with substantially constant section; and a retractable anti-extraction structure which is accommodated in said rectilinear bar (11) and is capable of alternately assuming a retracted configuration in which it is substantially entirely housed within the rectilinear bar (11), and an extracted configuration in which it protrudes cantilevered outwards of the rectilinear bar (11), laterally to the same, in order to prevent the complete coming out of the rectilinear bar (11) from the closed cavity (3).

2. The gas spring according to Claim 1, wherein the retractable anti-extraction structure comprises: one or more anti-extraction side appendages (12), separated and distinct from the rectilinear bar (11), which are fixed/coupled to the rectilinear bar (11) with the capability of moving between an extracted position in which the anti-extraction side appendage or appendages (12) protrude cantilevered out of the rectilinear bar (11), lateral to the same, in order to abut against the inner surface of the closed cavity (3), and a retracted position in which the anti-extraction side appendages (12) are substantially entirely housed within the rectilinear bar (11); and an extractor member (13), which is located on the rectilinear bar (11) and is adapted to move the anti-extraction side appendage or appendages (12) into the extracted position.

3. The gas spring according to Claim 2, wherein the anti-extraction side appendages (12), when in the extracted position, lie on a same plane substantially perpendicular to the longitudinal axis (L) of the rectilinear bar (11) and/or are substantially evenly spaced around the longitudinal axis (L) of the rectilinear bar (11).

4. The gas spring according to Claim 2 or 3, wherein the or each anti-extraction side appendage (12) is oblong in shape, and is inserted in axially slidable manner within a corresponding housing seat (14) that extends rectilinearly within said rectilinear bar (11); in the retracted position, the anti-extraction side appendage (12) being substantially entirely contained within the housing seat (14); in the extracted position, the anti-extraction side appendage (12) protruding cantilevered out of the rectilinear bar (11), through the mouth of the housing seat (14).

5. The gas spring according to Claim 4, wherein the housing seat(s) (14) extend within said rectilinear bar (11) in a radial direction.

6. The gas spring according to Claim 4 or 5, wherein the extractor member (13) is selectively adapted to take up a part of the inner volume of the housing seat or seats (14) of the anti-extraction side appendages (12), in order to axially push/move the/each anti-extraction side appendage (12) into the extracted position.

7. The gas spring according to Claim 6, wherein the various housing seats (14) extend within the rectilinear bar (11) up to reach and intersect a first longitudinal hole (15), which extends within the rectilinear bar (11) while remaining substantially parallel to the longitudinal axis (L) of the rectilinear bar (11).

8. The gas spring according to Claim 6, wherein the extractor member (13) is adapted to selectively engage said first longitudinal hole (15) in order to reduce the volume of each housing seat (14).

9. The gas spring according to Claim 8, wherein the extractor member (13) is a shank (16) or rectilinear shaft (160) screwed into said first longitudinal hole (15).

10. The gas spring according to Claim 9, wherein said first longitudinal hole (15) extends in pass-through manner across the rectilinear bar (11); the piston-rod (4) comprising a closing plug (162) that seals in fluid-tight manner said first longitudinal hole (15).

11. The gas spring according to Claim 10, wherein the rectilinear shaft (160) is entirely housed within said first longitudinal hole (15).

12. The gas spring according to Claim 10 or 11, wherein the piston-rod (4) comprises a one-way valve (164) that closes in fluid-tight manner a longitudinal duct (165) extending in pass-through manner across said rectilinear shaft (160).

13. The gas spring according to any one of the preceding claims, wherein the outer casing (2) has a monolithic structure and is provided with a second rectilinear hole (6), which ends into the closed cavity (3), has a shape substantially complementary to said rectilinear bar (11), and is engaged in pass-through and axially slidable manner by the same rectilinear bar (11).

14. A production method of a gas spring (1) comprising: an outer casing (2) that is internally provided with a closed cavity (3); and a piston-rod (4), which is partially inserted into the outer casing (2) in axially slidable and fluid-tight manner, and protrudes cantilevered within said closed cavity (3) in order to form a variable-volume closed chamber (5) adapted to contain pressurized gas;
the piston-rod (4) comprising: a rectilinear bar (11) with substantially constant section; and a retractable anti-extraction structure, which is accommodated in said rectilinear bar (11) and is capable of alternately assuming a retracted configuration in which it is substantially entirely housed within the rectilinear bar (11), and an extracted configuration in which it protrudes cantilevered outwards of the rectilinear bar (11), laterally to the same, in order to prevent the complete coming out of the rectilinear bar (11) from the closed cavity (3);
said production method being **characterized by** comprising the steps of: arranging the retractable anti-extraction structure of the piston-rod (4) in the retracted configuration; putting/inserting the rectilinear bar (11) into the outer casing (2) up to arrange the segment of the rectilinear bar (11) that accommodates said retractable anti-extraction structure, inside the closed cavity (3); arranging the retractable anti-extraction structure of the piston-rod (4) in the extracted configuration; and filling the closed cavity (3) with pressurized gas.

15. The production method of a gas spring according to Claim 14, wherein the retractable anti-extraction structure of the piston-rod (4) comprises one or more anti-extraction side appendages (12), which are fixed/coupled to the rectilinear bar (11) with the capability of moving between an extracted position in which the anti-extraction side appendage or appendages (12) protrude cantilevered out of the rectilinear bar (11) laterally to the same, in order to abut against the inner surface of the closed cavity (3), and a retracted position in which the anti-extraction side appendages (12) are substantially entirely housed within the rectilinear bar (11); the step of arranging the retractable anti-extraction structure of the piston-rod (4) in the retracted configuration entails inserting the anti-extraction side appendage or appendages (12) inside the respective housing seats (14) present in the rectilinear bar (11), while arranging said anti-extraction side appendage(s) (12) in the retracted position so that they do not protrude outwards of the rectilinear bar (11); the step of arranging the retractable anti-extraction structure of the piston-rod (4) in the extracted configuration entails moving said anti-extraction side appendage (s) (12) into the extracted position, so that they can prevent the subsequent extraction of the rectilinear bar (11).

16. The production method of a gas spring according to claim 15, wherein the movement of the anti-extraction side appendage or appendages (12) into the extracted position entails introducing an extractor member (13) into the rectilinear bar (11), so that the extractor member (13) engages the housing seats (14) of the various anti-extraction side appendage(s) (12), while moving the same anti-extraction side appendage or appendages (12) into the extracted position.

17. The production method of a gas spring according to claim 14, 15 or 16, wherein the filling of the closed cavity (3) with the pressurized gas entails introducing the pressurized gas into the closed cavity (3) through an auxiliary duct (10) present in the outer cavity (2); and then inserting a safety plug (9) into said auxiliary duct (10) in order to isolate the closed cavity (3) from the outside.
